Europäisches Patentamt

European Patent Office

Office européen des brevets

(19)

(11) EP 1 059 757 A1

(12) **DEMANDE DE BREVET EUROPEEN**

(43) Date de publication:
**13.12.2000 Bulletin 2000/50**

(51) Int Cl.⁷: **H04L 1/00**

(21) Numéro de dépôt: **99440140.4**

(22) Date de dépôt: **11.06.1999**

| (84) Etats contractants désignés:<br>**AT BE CH CY DE DK ES FI FR GB GR IE IT LI LU MC NL PT SE**<br>Etats d'extension désignés:<br>**AL LT LV MK RO SI**<br><br>(71) Demandeur: **ALCATEL**<br>**75008 Paris (FR)**<br><br>(72) Inventeurs:<br>• **Buda, Fabien**<br>**75006 Paris (FR)** | • **Lemois, Emmanuel**<br>**75005 Paris (FR)**<br><br>(74) Mandataire: **Scheer, Luc et al**<br>**ALCATEL,**<br>**Intellectual Property Department,**<br>**Postfach 300 929**<br>**70449 Stuttgart (DE)** |

(54) **Procédé de codage par blocs d'une cellule ATM utilisant un code produit**

(57) L'invention concerne un procédé de codage d'une cellule courte par code produit permettant de réaliser un bon compromis entre la puissance des émetteurs et la largeur de bande nécessaire dans le cadre de transmissions par satellite.

Selon l'invention, le code ligne et le code colonne composant le code produit sont des codes binaires linéaires en blocs choisis de telle sorte que l'un d'eux a une capacité de correction d'une erreur et que l'autre a une capacité de correction de deux erreurs.

FIG.3

EP 1 059 757 A1

**Description**

Le domaine de l'invention est celui du codage de données. Plus précisément, la présente invention concerne un procédé permettant de coder des blocs de données par code produit en utilisant des familles particulières de codes de lignes et de codes de colonnes. L'invention s'applique notamment au codage de cellules ATM.

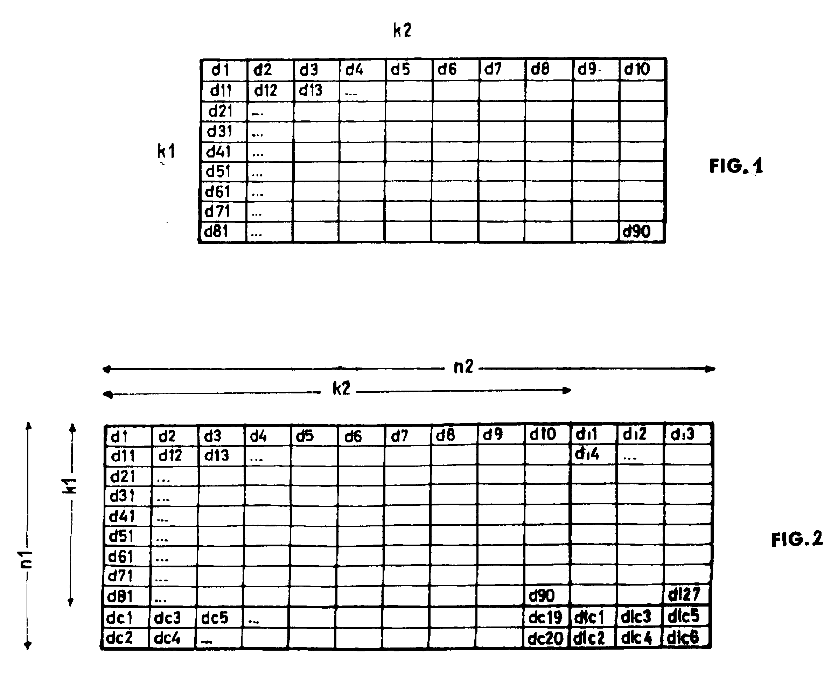

Le codage par code produit est un codage connu permettant d'assurer un codage des données à transmettre, par exemple par voie radio. Les figures 1 et 2 montrent le principe d'un codage produit.

On considère ici un bloc de 90 données (bits) à coder, ces données étant référencées d1 à d90. Les données sont rangées dans un tableau comme représenté sur la figure 1, le tableau comprenant un nombre kl de 9 lignes et un nombre k2 de 10 colonnes. Le codage par code produit consiste à appliquer un premier code en blocs (appelé code de ligne) à chacune des kl lignes pour obtenir des bits supplémentaires notés dli (FIG.2) correspondant aux codages de ces kl lignes. A titre d'exemple, les données dll, dl2 et dl3 correspondent au codage des données d1 à d10. Ici n2 = 13 et représente le nombre total de colonnes après application du code et n2-k2 = 3 et représente le nombre de colonnes supplémentaires dues à l'application du code. En fonction du code en bloc employé, on obtient ainsi k1* (n2-k2) bits supplémentaires. Ces bits sont rangés à la suite des données dont ils sont issus, ce qui permet d'obtenir un tableau de kl lignes et de n2 colonnes.

A la suite de ce premier codage, un second code en bloc (appelé code de colonne) est appliqué aux n2 colonnes, afin de générer un nombre (n1-k1)* n2 de bits supplémentaires. Dans la figure 2, on génère ainsi 20 bits supplémentaires (dci) à partir du codage des k2 colonnes et 6 autres bits supplémentaires (dlci) à partir du codage des (n2-k2) colonnes. La valeur de n1 est ici égale à 11 et n1-k1 = 2. A titre d'exemple, le codage des données de la première colonne du tableau de la figure 1 permet d'obtenir les bits dc1 et dc2.

Un code produit est défini à partir des paramètres (n1, k1) et (n2, k2) des codes de ligne et de colonne. Le rendement r du code produit est égal au produit des rendements du code de ligne et du code de colonne le composant. Soit dans ce cas : $r = \frac{k1 \cdot k2}{n1 \cdot n2}$.

Une autre caractéristique d'un code en bloc est sa capacité de correction t. Celle-ci est directement dépendante de la distance minimale de Hamming $d_{min}$ relative au code en bloc considéré.

A savoir :

$$t = \left[ \frac{d_{min} - 1}{2} \right]$$

où [ x ] désigne la partie entière de x.

Dans l'état de l'art, les codes produits sont utilisés notamment pour coder des cellules ATM. Pour ce type de cellules courtes, il faut utiliser un codage approprié ; les codes convolutifs ou les codes Reed Solomon se révèlent mal adaptés au codage de cellules ATM et offrent des performances moyennes.

La demande de brevet française Fr2.769.776 décrit un procédé de codage d'un bloc de données comprenant une première et une deuxième zone. Le procédé consiste à appliquer un code produit au bloc de données défini comme suit :

- un premier code en bloc est appliqué à la première zone du bloc de données,
- un deuxième code en bloc est appliqué à la deuxième zone du bloc de données,
- un troisième code en bloc est appliqué aux données obtenues par les deux premiers codages dans un sens perpendiculaire aux deux premiers codes.

En ce qui concerne les codes produits, il est en général choisi d'appliquer un code de ligne de capacité de correction t=1 et un code de colonne de même capacité de correction t=1. Ce choix a pour inconvénient d'obtenir un rendement pour le code produit toujours supérieur à 0,5 quel que soit le code choisi. Or, dans le cas d'une transmission par satellite, il est souhaité, afin d'assurer un bon compromis entre la puissance à émettre et la largeur de bande occupée, de se rapprocher le plus possible d'un rendement de codage de 0,5.

La présente invention a notamment pour objectif de déterminer des familles de codes de ligne et de codes de colonne qui permettent d'assurer un taux de codage adapté aux transmissions par satellite.

Plus précisément, un des objectifs de l'invention est de déterminer une famille codes produits correcteurs d'erreurs et donc les codes de ligne et les codes de colonne qui le composent, tels que appliqués à une cellule courte ils impliquent un rendement du code produit proche de 0,5. Pour choisir un code compatible avec les objectifs de l'invention, il faut remplir les conditions suivantes :

$$\begin{cases} k1 \cdot k2 \geq I_{cellule} & (1) \\ r = \frac{k1 \cdot k2}{n1 \cdot n2} \approx 0,5 & (2) \end{cases}$$

$I_{cellule}$ étant le nombre de bits de la cellule.

La condition (1) exprime le fait que le code produit s'applique à des blocs de la taille au moins de la cellule, des bits supplémentaires, nommés dans la suite de cette description bits de bourrage, n'appartenant pas à la cellule étant éventuellement ajoutés afin de compléter la quantité d'information nécessaire à l'application du code. Préférentiellement, on cherchera à utiliser des codes dont le produit des paramètres k1 et k2 se rapproche de la valeur $I_{cellule}$.

La condition (2) détermine que le produit des rendements des codes ligne et colonne doit être proche de 0,5, afin de réaliser un codage adapté à une transmission par satellite.

Préférentiellement, les bits de bourrage ajoutés afin de compléter la quantité d'information nécessaire à l'application du code ne sont pas transmis. Ce procédé revient à raccourcir le code produit. Le décodeur connaissant de son côté la séquence non transmise à ajouter en vue du décodage correct de la séquence de bits reçus. La condition (2) est dans ce cas donnée par :

$$r = \frac{I_{cellule}}{n1 \cdot n2 - (k1 \cdot k2 - I_{cellule})} \approx 0,5 \qquad (2)$$

Par ailleurs afin d'adapter finement le rendement du code, il est possible de ne pas transmettre certains bits de redondance, au nombre de $n_{poinc}$, selon un procédé dit de poinçonnage de code appliqué au code produit. . La condition (2) est dans ce cas donnée par :

$$r = \frac{I_{cellule}}{n1 \cdot n2 - (k1 \cdot k2 - I_{cellule}) - n_{poinc}} \approx 0,5 \qquad (2)$$

Ces objectifs, ainsi que d'autres qui apparaîtront par la suite, sont atteints grâce à un procédé de codage par code produit d'une cellule composée de données, sachant que la cellule est présentée en vue du codage sous forme de tableau et que le codage consiste notamment à :

    a - appliquer un premier code binaire linéaire en bloc à une dimension du tableau (lignes respectivement colonnes) contenant la cellule ;
    b - appliquer un deuxième code binaire linéaire en bloc à l'autre dimension du tableau (colonnes respectivement lignes) contenant la cellule.

Les codes linéaires en blocs utilisés vérifiant le critère suivant : l'un d'eux a une capacité de correction d'une erreur (t=1) et l'autre a une capacité de correction de deux erreurs (t=2).

Avantageusement, les codes binaires linéaires en blocs correspondent à des codes BCH de longueur n et de dimension k, ces codes BCH appartenant à l'une quelconque des familles suivantes : (n, k), (n, k-1), (n+1, k), (n-s, k-s) ou (n-s, k-1-s) et (n+1-s, k-s), avec k, n et s entiers et s<k, vérifiant le critère cité ci-dessus.

Préférentiellement, le procédé selon l'invention consiste à entrelacer avant l'étape b les données obtenues lors de l'étape a.

D'autres caractéristiques et avantages de l'invention apparaîtront à la lecture de la description suivante d'un mode de mise en oeuvre préférentiel, donné à titre illustratif et non limitatif, et des dessins annexés dans lesquels :

- les figures 1 et 2 montrent le principe d'un codage produit ;
- la figure 3 montre un exemple de code produit selon l'invention appliqué au codage d'une cellule ATM ;
- la figure 4 montre les caractéristiques en matière de rendement d'une famille de codes BCH selon l'invention.

Les figures 1 et 2 ont été décrites précédemment en référence à l'état de la technique.

Dans un mode de mise en oeuvre particulier de la présente invention, les codes ligne et colonne utilisés pour construire le code produit sont des codes binaires BCH (n, k), leurs étendus (n+1, k), leurs expurgés (n, k-1), ainsi que les codes raccourcis de ces codes (n-s, k-s), (n-s, k-1-s) et (n+1-s, k-s) avec k, n et s entiers et s<k.

Les codes étendus sont obtenus par l'ajout d'un bit de parité à chaque mot d'un code BCH ayant sa distance de Hamming minimale impaire. Autrement dit, son polynôme générateur g(x) ne contient pas le facteur (x+1). Un code expurgé est obtenu à partir d'un code BCH ayant g(x) comme polynôme générateur, g(x) ne contenant pas le facteur (x+1). Le code expurgé est obtenu par le nouveau polynôme générateur (x+1).g(x).

Dans la suite, on nommera code BCH l'une quelconque des variantes décrites ci-dessus.

Une paire de codes constituant un code produit selon l'invention est composée du code BCH étendu (26,32) dont la capacité de correction est t=1 et du code BCH étendu (21,32) dont la capacité de correction est t=2. Une liste des codes BCH de base et de leur capacité de correction est donné dans l'ouvrage « Digital Communication », John G. Proakis, Mac Graw Hill, p 437, seconde édition.

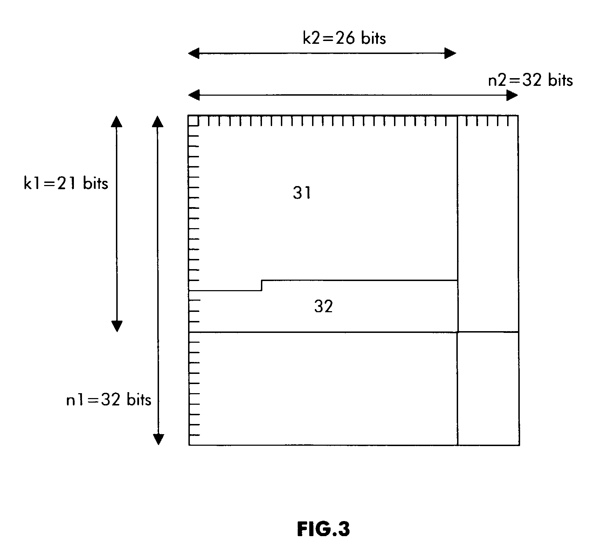

La figure 3 représente une cellule ATM (31), composée de 424 bits et rangée en vue de son codage dans un tableau de 21 lignes et 26 colonnes dans le cas où le code BCH (32,21) t=2 est choisi comme code de ligne et le code BCH (32,26) t=1 est choisi comme code de colonne. Une inversion des codes de ligne et de colonne est envisageable. La méthode de rangement de la cellule ATM dans le tableau est ici un rangement remplissant, séquentiellement, de gauche à droite, la première ligne puis la seconde, et ainsi de suite jusqu'à ce que tous les bits de la cellule soient rangés dans le tableau. Dans le cas présent, les seize premières lignes sont remplies complètement de bits de la cellule ATM, la dix-septième contient les huit derniers bits appartenant à la cellule ATM. Les emplacements restants du tableau (32) peuvent être occupés par des bits de bourrage aléatoires ou non qui peuvent ne pas être transmis, ce qui revient à raccourcir le code produit. Cette méthode de rangement a été décrite pour sa simplicité, il est toutefois envisageable de définir toute autre méthode de rangement à condition que l'on dispose de moyens de décodage pour séparer les bits de la cellule ATM des éventuels bits de bourrage ou de poinçonnage et reconstituer après décodage correctement la cellule ATM.

Le rendement du code produit basé sur les codes ligne BCH (32,26) et colonne (32,21) est de $r = \frac{26 \cdot 21}{32 \cdot 32}$ = 0,53.

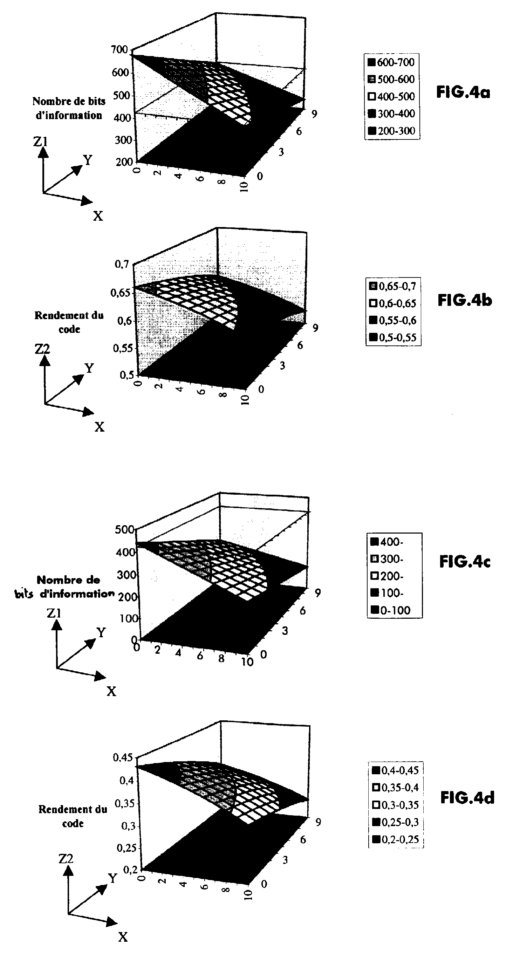

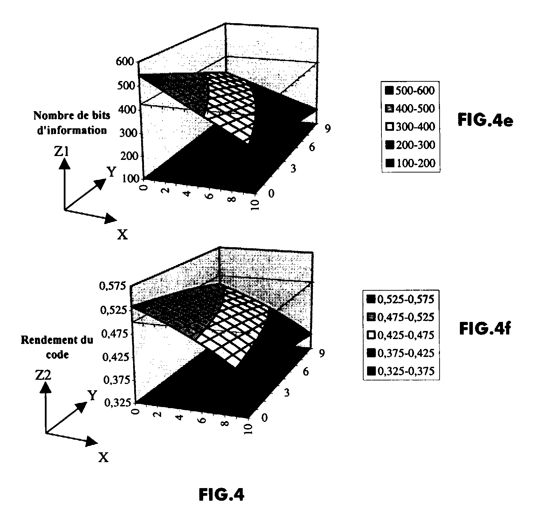

La figure 4 composée des figures 4a, 4b, 4c, 4d, 4e, 4f représente les caractéristiques de paires de codes composant un code produit. Les diagrammes sont à considérer par paires : (4a, 4b), (4c, 4d), (4e, 4f), chacune des paires représentant les résultats de simulation pour des familles de codes ligne et colonne particuliers.

Dans la direction X des graphiques, est représentée la valeur du raccourcissement pour le code ligne, dans la direction Y des graphique, est représentée la valeur du raccourcissement pour le code colonne. Pour chaque combinaison d'un code ligne et d'un code colonne est représenté dans la direction Z1 des graphiques 4a, 4c, 4e, le nombre de bits codés par le code et dans la direction Z2 des graphiques 4b, 4d, 4f, le rendement du code.

Pour la paire (4a, 4b), les codes lignes ainsi que les codes colonne sont déduits par raccourcissement du code BCH (32,26) et ont tous une capacité de correction t=1. Le rendement des différents codes considérés s'étend dans ce cas entre environ 0,55 et environ 0,65.

Pour la paire (4c, 4d), les codes lignes ainsi que les codes colonne sont déduits par raccourcissement du code BCH (32,21) et ont tous une capacité de correction t=2. Le rendement des différents codes considérés s'étend dans ce cas entre environ 0,30 et environ 0,45.

Pour la paire (4e, 4f), les codes lignes sont déduits par raccourcissement du code BCH (32,26) et ont tous une capacité de correction t=1 et les codes colonnes sont déduits par raccourcissement du code BCH (32,21) et ont tous une capacité de correction t=2. Le rendement des différents codes considérés s'étend dans ce cas entre environ 0,45 et environ 0,52.

Il est apparent à la lumière des différents graphiques que pour les combinaisons de codes dont l'un a une capacité de correction t=1 et l'autre une capacité de correction t=2, graphiques 4e et 4f, les conditions (1) et (2) adaptées au codage d'une cellule ATM, en vue d'une transmission par satellite, sont bien mieux remplies que pour deux codes ayant une capacité de correction t=1, graphiques 4a et 4b, ou deux codes ayant une capacité de correction t=2, graphiques 4c et 4d.

## Revendications

**1.** Procédé de codage d'une cellule par code produit, ladite cellule étant contenue dans un tableau, dont les lignes et les colonnes représentent chacune une dimension dudit tableau, ledit procédé consistant à :

- appliquer sur une dimension dudit tableau un premier code binaire linéaire en bloc ;
- appliquer sur l'autre dimension dudit tableau un second code binaire linéaire en bloc ;

lesdits codes binaires linéaires en bloc étant représentés par leur capacité de correction,
caractérisé en ce que,
l'un desdits codes binaires linéaires en bloc a une capacité de correction d'une erreur et l'autre desdits codes binaires linéaire en bloc a une capacité de correction de deux erreurs.

**2.** Procédé selon la revendication 1,
caractérisé en ce que,
lesdits codes binaires linéaires en blocs sont des codes en bloc BCH ou dérivés, l'un de capacité de correction d'une erreur, l'autre de capacité de correction de deux erreurs.

**3.** Procédé selon l'une des revendications 1 ou 2,
caractérisé en ce que,
ledit code produit appliqué à ladite cellule a un rendement proche de 0,5.

**4.** Procédé selon l'une des revendications 1 à 3,
caractérisé en ce que,
ladite cellule à coder est une cellule ATM.

**5.** Procédé selon l'une des revendications 1 à 4,
caractérisé en ce que,
ladite cellule est destinée à être transmise dans une chaîne de communication comprenant un satellite.

**6.** Procédé selon l'une des revendications 1 à 5,
caractérisé en ce que,
ledit tableau contenant ladite cellule contient en outre des bits de remplissage.

**7.** Procédé selon l'une des revendications 1 à 5,
caractérisé en ce que,
ledit tableau contenant ladite cellule contient en outre des bits de poinçonnage.

FIG. 1

k2

| d1 | d2 | d3 | d4 | d5 | d6 | d7 | d8 | d9 | d10 |
|---|---|---|---|---|---|---|---|---|---|
| d11 | d12 | d13 | ... | | | | | | |
| d21 | ... | | | | | | | | |
| d31 | ... | | | | | | | | |
| d41 | ... | | | | | | | | |
| d51 | ... | | | | | | | | |
| d61 | ... | | | | | | | | |
| d71 | ... | | | | | | | | |
| d81 | ... | | | | | | | | d90 |

(k1)

FIG. 2

n2
k2

n1
k1

| d1 | d2 | d3 | d4 | d5 | d6 | d7 | d8 | d9 | d10 | d11 | d12 | d13 |
|---|---|---|---|---|---|---|---|---|---|---|---|---|
| d11 | d12 | d13 | ... | | | | | | | d14 | ... | |
| d21 | ... | | | | | | | | | | | |
| d31 | ... | | | | | | | | | | | |
| d41 | ... | | | | | | | | | | | |
| d51 | ... | | | | | | | | | | | |
| d61 | ... | | | | | | | | | | | |
| d71 | ... | | | | | | | | | | | |
| d81 | ... | | | | | | | | d90 | | | d127 |
| dc1 | dc3 | dc5 | ... | | | | | | dc19 | dlc1 | dlc3 | dlc5 |
| dc2 | dc4 | ... | | | | | | | dc20 | dlc2 | dlc4 | dlc6 |

EP 1 059 757 A1

FIG.3

FIG.4a

Nombre de bits d'information

Z1

Legend:
- ■ 600-700
- ▦ 500-600
- □ 400-500
- ■ 300-400
- ■ 200-300

FIG.4b

Rendement du code

Z2

Legend:
- ▦ 0,65-0,7
- □ 0,6-0,65
- ■ 0,55-0,6
- ■ 0,5-0,55

FIG.4c

Nombre de bits d'information

Z1

Legend:
- ■ 400-
- ▦ 300-
- □ 200-
- ■ 100-
- ■ 0-100

FIG.4d

Rendement du code

Z2

Legend:
- ■ 0,4-0,45
- □ 0,35-0,4
- □ 0,3-0,35
- ■ 0,25-0,3
- ■ 0,2-0,25

7

**Nombre de bits d'information**

Z1

Y

X

- 500-600
- 400-500
- 300-400
- 200-300
- 100-200

**FIG.4e**

**Rendement du code**

Z2

Y

X

- 0,525-0,575
- 0,475-0,525
- 0,425-0,475
- 0,375-0,425
- 0,325-0,375

**FIG.4f**

**FIG.4**

**Office européen des brevets**

## RAPPORT DE RECHERCHE EUROPEENNE

Numéro de la demande

EP 99 44 0140

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 909 109 A (CIT ALCATEL) 14 avril 1999 (1999-04-14) * abrégé * * page 1, alinéa 1 - alinéa 5 * * figures * | 1-5 | H04L1/00 |
| Y | * revendication 1 * | 6,7 | |
| Y | GB 2 315 964 A (NIPPON ELECTRIC CO) 11 février 1998 (1998-02-11) * abrégé * * page 3, ligne 11 - ligne 21 * * figure 12 * | 6 | |
| Y | FEYLING C: "PUNCTURED MAXIMUM DISTANCE SEPARABLE CODES" ELECTRONICS LETTERS, vol. 29, no. 5, 4 mars 1993 (1993-03-04), pages 470-471, XP000350818 ISSN: 0013-5194 * abrégé * * introduction * | 7 | |
| | | | **DOMAINES TECHNIQUES RECHERCHES (Int.Cl.7)** |
| A | EP 0 603 932 A (KONINKL PHILIPS ELECTRONICS NV) 29 juin 1994 (1994-06-29) * abrégé * * figure 1 * | 1-5 | H04L |
| A | IWASE R ET AL: "A BIT ERROR AND CELL LOSS COMPENSATION METHOD FOR ATM TRANSPORT SYSTEMS" ELECTRONICS & COMMUNICATIONS IN JAPAN, PART I - COMMUNICATIONS, vol. 76, no. 3, 1 mars 1993 (1993-03-01), pages 16-30, XP000416972 ISSN: 8756-6621 * abrégé * * figures 1-3 * | 1-6 | |

Le présent rapport a été établi pour toutes les revendications

| Lieu de la recherche | Date d'achèvement de la recherche | Examinateur |
|---|---|---|
| LA HAYE | 1 novembre 1999 | De Riccardis, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

ANNEXE AU RAPPORT DE RECHERCHE EUROPEENNE
RELATIF A LA DEMANDE DE BREVET EUROPEEN NO.

EP 99 44 0140

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

01-11-1999

| Document brevet cité au rapport de recherche | | Date de publication | Membre(s) de la famille de brevet(s) | | Date de publication |
|---|---|---|---|---|---|
| EP 0909109 | A | 14-04-1999 | FR | 2769776 A | 16-04-1999 |
| | | | CA | 2247668 A | 09-04-1999 |
| GB 2315964 | A | 11-02-1998 | JP | 10051509 A | 20-02-1998 |
| | | | CN | 1176548 A | 18-03-1998 |
| EP 0603932 | A | 29-06-1994 | DE | 69317867 D | 14-05-1998 |
| | | | DE | 69317867 T | 22-10-1998 |
| | | | JP | 6232770 A | 19-08-1994 |
| | | | US | 5623504 A | 22-04-1997 |

EPO FORM P0460

Pour tout renseignement concernant cette annexe : voir Journal Officiel de l'Office européen des brevets, No.12/82